# EUROPEAN PATENT SPECIFICATION

(11) **EP 2 422 468 B1**
(45) Date of publication and mention of the grant of the patent: **21.08.2013**
(21) Application number: 09786471.4
(22) Date of filing: 21.04.2009
(51) Int. Cl.: H04J 3/06

(54) **ADD AND DROP ELEMENTS FOR NTP ON-PATH-SUPPORT AND METHOD FOR INTER-OPERATING BETWEEN NTP AND IEEE-1588 PROTOCOL DOMAINS**
EIN- UND AUSKOPPELELEMENTE FÜR NTP-ON-PATH-UNTERSTÜTZUNG UND VERFAHREN ZUR INTEROPERATION ZWISCHEN NTP- UND IEEE-1588-PROTOKOLL-DOMÄNEN
ÉLÉMENTS D'ADDITION ET D'ÉLIMINATION POUR SUPPORT SUR TRAJET NTP ET PROCÉDÉ D'INTERACTION ENTRE LES DOMAINES DE PROTOCOLE NTP ET IEE-1588

(43) Date of publication of application: 29.02.2012
(73) Proprietor: Alcatel Lucent, 75007 Paris (FR)
(72) Inventor: LE PALLEC, Michel, F-91620 Nozay (FR); BUI, Dinh Thai, F-91620 Nozay (FR)
(74) Representative: Therias, Philippe
(86) International application number: PCT/IB2009/052799
(87) International publication number: WO 2010/122377

(56) References cited:
- WO-A-2008/134924
- O'DONOGHUE, KAREN: "Synchronization in Packet Networks NTPv4 and IEEE 1588"[Online] 13 November 2007 (2007-11-13), pages 1-27, XP002560987 www.telecom-sync.com Retrieved from the Internet: URL:http://www.telecom-sync.com/pdf/2007/w orkshop/itsf-ntpv4-1588-nov07-v2.pdf> [retrieved on 2009-12-16]

## Description

### Field of the invention

The invention relates to add/drop elements for providing on-path-support for NTP (Network Time Protocol) and is particularly concerned with encapsulating NTP timing messages within IEEE-1588 messaging.

### Background of the Invention

Time distribution protocols, such as IETF NTP (Network Time Protocol version 3 & 4) and IEEE-1588 Version 2 are used for supporting the distribution of time (and thus frequency) over Packet Switched Networks. NTP relies on UDP (User Datagram Protocol) or TCP/IP (Transmission Control Protocol / Internet Protocol), whereas IEEE-1588 V2 typically relies on UDP/IP or Ethernet (and is also supported over other protocols such as DeviceNet). NTP and IEEE1588 may be deployed together on the same network transparently to each other.

NTP is usually dedicated to applications with moderate time requirements (applications with demands for accuracies in the millisecond range) whereas IEEE-1588 V2 is usually identified as the preferred candidate for more stringent applications (within microsecond accuracy). This performance gap in terms of achievable time accuracy between these two protocols is a barrier for an optimal sharing of synchronization resources that would yield to OPEX/CAPEX savings. Having the same level of performance between NTP and IEEE-1588 V2 would allow for using existing NTP elements for more stringent applications. This would reduce the overall Synchronization OPEX (regarding load sharing/balancing and protection issues) or ease the overall synchronization resource deployment.

As timing distribution protocols, NTP and IEEE-1588 V2 both confront similar issues in propagating timing throughout a network including delay asymmetry between messages travelling in different directions over a link between two network elements and Packet Delay Variation (PDV) arising in buffering and switching of messages.

"On-path-support" in the case of IEEE-1588 refers to features of the communication path that can be used to improve time. Some examples of such features include End-to-End, Peer-to-Peer Transparent Clocks, Boundary Clocks). These were introduced in the IEEE-1588 V2 specification for fighting against the issues of delay-asymmetry and Packet Delay Variation issues.

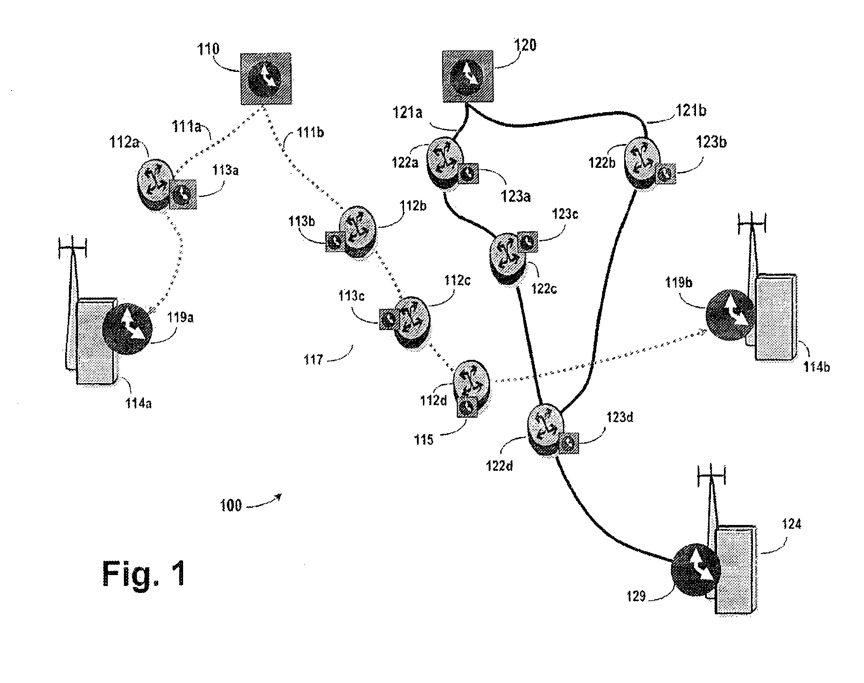

By way of example, referring to **Fig. 1** there may be seen a network **100** having an IEEE-1588 V2 Master Clock **110** with **119a** and **119b** Slave Clocks. Communication paths **111a** and **111b** are established between Master Clock **110** and Slave Clocks **119a** and **119b** respectively. Network elements **112a, 112b, 112c, 112d;** and **122a, 122b, 122c,** and **122d** represent network switches (and/or routers). Associated with network elements **112a, 112b, 112c,** and **112d** are on-path-support clock elements **113a, 113b, 113c,** and **115** respectively. Elements **113a, 113b,** and **113c** are IEEE-1588 V2 Transparent Clocks, and element **115** is an IEEE-1588 V2 Boundary Clock. Region **117** highlights an on-path-support domain consisting of switches (or routers) **112b, 112c,** and **112d** and their respective on-path-support clock elements **113b, 113c,** and **115.** Elements **114a** and **114b** represent mobile base stations supported by IEEE-1588 V2 Slave Clocks **119a** and **119b** respectively.

Likewise (Fig. 1) there may be seen NTP Server **120** having NTP Client **129.** NTP communication path **121a** and **121b** are established between NTP Server **120** and NTP Client **129,** illustrating the inherent possibility of non-optimized NTP connections. On-path-support clock elements (e.g Transparent Clocks) **123a, 123b, 123c,** and **123d** are associated with switches (or routers) **122a, 122b, 122c,** and **122d** respectively. Element **124** represents a mobile base station supported by NTP Client **129** although under the existing state-of-art NTP protocol may not be sufficiently accurate to support mobile services (in many if not most implementations).
Another example is disclosed in WO 2008/134924 A, relating to a method and a system of clock transmission. A first information corresponding to a clock transferred by a first network equipment based on a first protocol (SDH or SONET) and a second information corresponding to a clock transferred by a second network equipment based on a second protocol (PTP) are acquired, and a source selection is performed in a manner based on the second protocol according to the second clock signal. Therefore, the equipment in different types of networks can conveniently select a clock with a higher class from clocks transferred based on different protocols, so as to realize a normalization management on the clocks transferred based on different protocols.

Presently, NTP is much more extensively deployed than IEEE-1588. If NTP V4 and IEEE-1588 V2 could somehow be brought to parity regarding timing accuracies, then they could be equally deployed in the case of stringent applications (such as mobile networks). This could provide a more flexible and optimal use of synchronization resources especially regarding the more expensive network element synchronization sources such as NTP Servers and IEEE-1588 Masters.

In order for this parity to be accomplished, NTP would have to be improved in order to reach the level of IEEE1588 V2 performance.

One approach that would be possible in order to improve the time distribution from an NTP server to an NTP client is to take advantage of the IEEE-1588 on-path-support. It would be possible to connect the different time protocol domains (from NTP to IEEE-1588 to NTP) with relevant "clock" nodes embedding a dual protocol stack located at protocol domain boundaries. This could be implemented as a first "clock" node with the dual functionality {NTP Client + IEEE-1588 Master} and another node with the dual functionality {IEEE-1588 Slave + NTP Server}.

A disadvantage of this solution is that time distribution performance may be dependent of the deployment of these aforementioned dual protocol clock nodes as gateway elements between time protocol domains. In operation, these gateway elements would have to ensure the interworking between IETF NTP and IEEE-1588 V2 domains/segments with IEEE-1588 V2 Master Clock features in terms of accuracy and stability. As a result, the associated clocks (oscillators) within the gateway elements would not be inexpensive. In addition, this domain segmentation approach suffers from the additional bandwidth consumption of the superposition of IEEE-1588 V2 signaling messages related to independent master/slave "links".

A further major drawback of this method is that of not being able to balance/share the time distribution load between NTP servers and IEEE-1588 V2 masters. This results in an increase in costs of synchronization deployment and protection schemes. Moreover, the implied static/manual configuration of clock (oscillators) at the gateway level shouldn't easily applied in an inter-operator/domain context.

What is therefore required is some method or mechanism for inter-operating NTP and IEEE-1588 protocols which brings NTP timing distribution performance to IEEE-1588 performance level.

### Summary of the Invention

An object of the present invention is to provide an improved method and system for inter-operating between NTP and IEEE-1588 protocol domains.

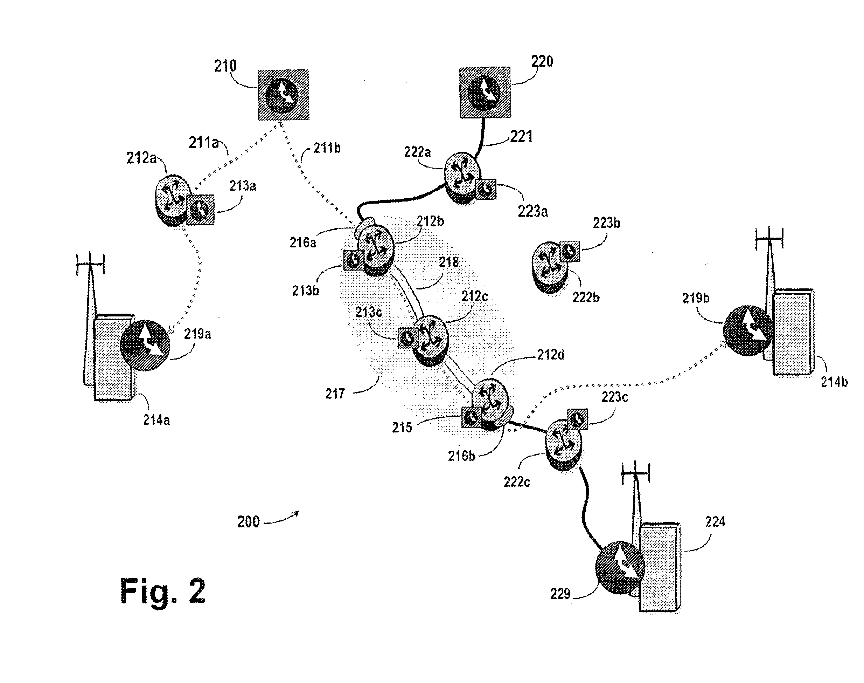

According to an aspect of the present invention there is provided a method for providing inter-operation between an IEEE-1588 protocol region having on-path-support elements (for messaging) and an NTP protocol region wherein NTP messages traverse the IEEE-1588 protocol region. The architecture (Fig. 2) has a first NTP ADD/DROP element at the protocol region boundary (between the NTP protocol region and the IEEE-1588 protocol region) where NTP messages enter (direction from NTP server to NTP client taken as an example) the IEEE-1588 region. The system also has a second NTP ADD/DROP element at the protocol region boundary (between the IEEE-1588 protocol region and the NTP protocol region) where at NTP messages exit (direction from NTP server to NTP client) the IEEE-1588 region. The first NTP ADD/DROP element encapsulates incoming NTP messaging time-stamps within IEEE-1588 messages entering said IEEE-1588 protocol region, and the second NTP ADD/DROP element de-encapsulates the NTP messaging time-stamps for forwarding them to the NTP Client and updates said messaging time-stamps with timing information provided by IEEE-1588 (delay correction).

Advantageously, the first NTP ADD/DROP element possesses a local clock which times a buffering delay incurred by the NTP messaging time-stamp while awaiting an IEEE-1588 message. This buffering delay is used by the first NTP ADD/DROP element to increment the NTP messaging time-stamp. The local clock may have an inherent accuracy on the order of one microsecond and a precision on the order of 100 ppm.

Also advantageously, the encapsulation performed by the first NTP ADD/DROP element uses the Type_Length_Value field of the IEEE-1588 messages within which it is encapsulates the NTP message.

According to another embodiment of the invention, there is provided a method for providing inter-operation between an IEEE-1588 protocol region having on-path-support for messaging and an NTP protocol region wherein NTP messages traverse the IEEE-1588 protocol region. The method includes the steps of encapsulating an NTP timing message within an IEEE-1588 timing message upon entry (taking the NTP-server-to-NTP-client direction as an illustration) of the NTP timing message into the IEEE-1588 protocol region and then de-encapsulating the NTP timing message from the IEEE-1588 timing message upon exit from said IEEE-1588 protocol region. In addition, upon the exit there is the adjusting of a time-stamp of the NTP timing message with the timing information according to IEEE-1588 delay correction.

Under some configurations there is the additional step of incrementing the time-stamp of the NTP timing message by an amount representative of a buffering delay experienced by NTP messages before their encapsulation within the IEEE-1588 timing message.

Advantageously, the incrementing step is performed prior to the encapsulation. In some embodiments the buffering delay is measured by a clock located at the network element which performs the encapsulating step. In some preferred embodiments, the clock has an accuracy on the order of one microsecond and a precision on the order of 100 ppm.

In certain embodiments the encapsulating step uses the Type_Length_Value field of the IEEE-1588 messages.

### Brief Description of the drawings

The present invention will be further understood from the following detailed description of embodiments of the invention, with reference to the drawings in which:

Fig. 1 illustrates a network having elements supporting NTP and IEEE-1588 timing protocols as known in the art;

Fig. 2 illustrates a network having elements supporting inter-operation of NTP and IEEE-1588 timing protocols according to an embodiment of the invention; and

Fig. 3 illustrates a timing diagram showing the relationships of various timing delays which occur in messages between network elements according to an embodiment of the invention.

It is noted that in the attached figures, like features bear similar labels.

### Detailed Description

According to a proposed embodiment, inter-operation of the NTP and IEEE-1588 protocols may be performed by using the IEEE-1588 V2 on-path-support signaling for carrying the NTP protocol messages. This is done by performing a protocol inter-working at the intersection of protocol time domains. In such a solution, IEEE-1588 V2 Transparent Clocks would not have to be up-graded as per a dual protocol solution. The encapsulation and des-encapsulation of the NTP signaling would be performed by NTP "ADD/DROP" elements. As will be seen from the following discussions, the clock requirements for these ADD/DROP elements are strongly relaxed compared to the clock requirements for the gateway elements previously described.

As a basic building block, the NTP ADD/DROP elements are implemented at the protocol domain boundaries/intersection points. As such, the NTP ADD/DROP elements have to guarantee the coherence and continuity between NTP and IEEE-1588 V2, and particularly between NTP time-stamps and both IEEE-1588 V2 time-stamps and correction fields.

Referring to **Fig. 2** there may be seen a network 200 illustrating an embodiment of the invention. In this network, like reference numbers refer to like network elements of **Fig. 1****,** so that there may be seen an IEEE-1588 V2 Master Clock **210** with **219a** and **219b** Slave Clocks. Communication paths **211a** and **211b** are established between Master Clock **210** and Slave Clocks **219a** and **219b** respectively. Network elements **212a, 212b, 212c, 212d;** and **222a, 222b, 222c,** and **222d** represent network switches (or routers). Associated with switches (or routers) **212a, 212b, 212c,** and **212d** are on-path-support clock elements **213a, 213b, 213c,** and 215 respectively. Elements **213a, 213b,** and **213c** are IEEE-1588 V2 Transparent Clocks, and element **215** is an IEEE-1588 V2 Boundary Clock. Region **217** highlights an on-path-support domain consisting of switches (or routers) **212b, 212c,** and **212d** and their respective IEEE-1588 V2 on-path-support clocks **213b, 213c,** and **215.** Elements **216a** and **216b** represent NTP ADD/DROP Elements associated with switches **212b** and **212d** respectively at the boundary of region **217.** Pipeline **218** represents the communication path where the NTP messages are encapsulated within IEEE-1588 V2 messages and carried across region **117.** Elements **214a** and **214b** represent mobile base stations synchronized by IEEE-1588 V2 Slave Clocks **219a** and **219b** respectively.

Likewise (Fig.2) there may be seen NTP Server **220** having NTP Client **229.** NTP communication path **221** is established between NTP Server **220** and NTP Client **229.** NTP Transparent Clocks **223a** and **223c** are associated with switches or routers **222a** and **222c** respectively. Element **224** represents a mobile base station synchronized by NTP Client **229[comment].**

In operation, the IEEE-1588 V2 correction fields in SYNC and DELAY_REQ messages are cumulative due to the Network Element traversal delays, with initializations and treatments at the Master/Slave levels. NTP ADD/DROP elements are assumed not to be necessarily located at the Master/ Slave levels and have thus to take into account Input and Output IEEE-1588 V2 correction fields in order to improve the NTP time accuracy. These IEEE-1588 V2 fields are updated by the IEEE-1588 V2 Transparent Clocks within the on-path-support domain like region **117.**

In such a configuration NTP messaging is carried within the IEEE-1588V2 messaging. One way to encapsulate NTP within IEEE-1588 V2 is to take advantage of the flexible IEEE-1588 V2 structure through using a Type Length Value field to encapsulate the message.

Therefore, NTP ADD/DROP elements are required to "encapsulate" the NTP messaging (time-stamps) within the existing domain crossing IEEE-1588 V2 messages and to update the time information of the NTP protocol with the IEEE-1588 V2 one (correction field) at the ADD/DROP element level upon exit of the domain. Thus, referring to Fig. 2, the NTP timing messages from NTP Server **220** would pass through switch **220a** and arrive at NTP ADD/DROP element **216a** at the entry to IEEE-1588 V2 protocol domain region **117.** NTP ADD/DROP element **216a** would encapsulate the NTP timing message within concurrent IEEE-1588 V2 messages arriving at switch **212b** and being updated by Transparent Clock **213b.** Of course the NTP timing message would have to wait for the next IEEE-1588 V2 message to arrive before the encapsulation could be performed.

This wait requires that the NTP ADD/DROP element owns an internal clock to be able to time the buffering delays experienced by NTP message at the ADD level, as the NTP messages wait for their IEEE-1588 V2 carrier messages. However, this clock is may take the form of a relatively inexpensive clock regarding the requirements for the time correction. Due to the IEEE-1588 V2 protocol, the buffering time can not exceed the time between two IEEE-1588 V2 messages, which is typically 10ms. As well, in order to achieve the parity effect that is the inter-operating objective of the invention, the time accuracy should be close to a microsecond or more accurate. Combining these two features yields a frequency accuracy requirement on the order of 100 ppm for the ADD/DROP clock.

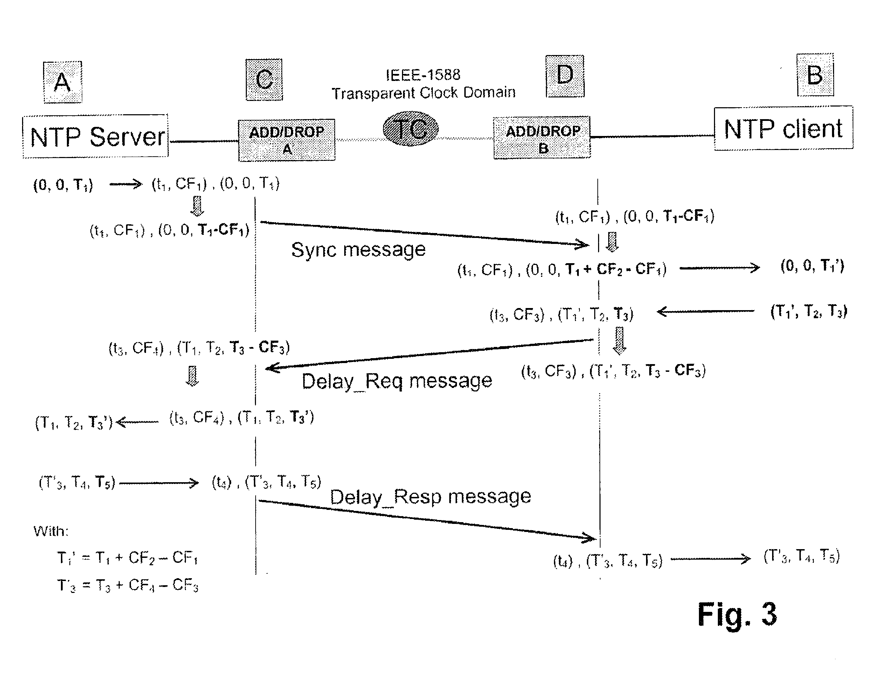

Specifics of the timing inter-operation is illustrated in **Fig. 3** and the annotations therein in which:

A is the NTP Server, such as NTP Server **220** in **Fig. 2****;**

B is the NTP Client, such as NTP Client **229** in **Fig. 2****;**

C is an ADD/DROP element, such as ADD/DROP element **216a** in **Fig. 2****;**

D is an ADD/DROP element, such as ADD/DROP element **216b** in **Fig. 2****;**

t is the IEEE-1588 time-stamp;

T is the NTP time-stamp which will be adjusted; and

OFFSET is the time offset between B and A

Without any support, the NTP relies on the following equation system:

T₂-T₁ =OFFSET+ Delay_AB

T₄-T₃ =-OFFSET+ Delay_BA

Then, with reference to the IEEE-1588 V2 delay correction in event messages protocol (wherein CFₙ represents the Correction_Field):

CF₁ is observed in the Sync message at C;

CF₂ is observed in the Sync message at D;

CF₃ is observed in the Delay_Req message at D ; and

CF₄ is observed in the Delay_Req message at C.

In considering a IEEE-1588V2 Transparent Clock supported link it may be assumed that:

Delay_AB = non_corrected_Delay_AB + (CF₂-CF₁)

Delay_BA = non_corrected_Delay_BA + (CF₄-CF₃)

Then, by rearrangement:

T₂ -T₁ - (CF₂ - CF₁) = OFFSET+ non_corrected_Delay_AB

T₄ -T₃ - (CF₄ - CF₃) = - OFFSET+ non_corrected_Delay_BA

And this may be written as:

T₂-T₁' = OFFSET+ non_corrected_Delay_AB

T₄-T₃' = - OFFSET+ non_corrected_Delay_BA

This equation system is compliant with the NTP equation system recited above. That is, the NTP protocol algorithm implemented would be unchanged in the use of these timing supplements. The inter-operation is performed by introducing:

T₁'=T₁+ CF₂-CF₁

and T'₃= T₃+CF₄-CF₃

Note that on **Fig. 3**, the encapsulation of the last NTP message carrying (T'₃, T₄, T₅) in an IEEE-1588 V2 message (in the Delay_Resp message through an ADD/DROP element) is optional.

In general, the ADD/DROP NTP elements are responsible for:

- detecting NTP message packets and IEEE-1588 V2 message packets;

- updating the NTP messaging (time-stamps) according to the buffering delays experienced by NTP message at the ADD level, as NTP messages wait for their IEEE-1588V2 carrier messages.

Complementing the basic building block described above may be an auto-discovery/advertising mechanism dedicated to inform a management or a control plane of the position of these ADD/DROP elements in order to ease the (dynamic) establishment of the most preferred paths between an NTP Server and an NTP Client.

In general, the denser the deployment of ADD/DROP elements across the network, the more the NTP to IEEE-1588 V2 inter-operation would allow optimal flexibility for the timing synchronization distribution to yield an expected homogenous performance within the network. Associated mapping functions between IEEE-1588 V2 and NTP would enable an interchange of clock sources while needed allow for additional functionality of protection and load balancing of synchronization sources.

As a further observation, the inter-operating method and system described above would enable networks to have a lighter prioritization treatment of the synchronization signaling at the Network Element level for a given performance level. This is because these network elements have only to consider one (IEEE-1588 V2) protocol signaling flow instead of two (NTP and IEEE-1588 V2).

A main advantage of the described embodiment is to guarantee a better NTP performance by taking advantage of the IEEE-1588 V2 "on-path-support" in an inter-operating way. With expectations of a similar performance level in terms of achievable time accuracy, both protocols would be able to address timing stringent applications such as the wireless networks.

## Claims

1. A system for providing protocol inter-operation between an IEEE-1588 protocol region (217) having on-path-support for messaging and an NTP protocol region wherein NTP messages traverse the IEEE-1588 protocol region (217), said system comprising:
a first NTP ADD/DROP element (216a) at a protocol boundary between said NTP protocol region and said IEEE-1588 protocol region (217) where the NTP messages enter the IEEE-1588 region;
a second NTP ADD/DROP element (216b) at a protocol boundary between said IEEE-1588 protocol region (217) and the NTP protocol region where the NTP messages exit said IEEE-1588 region;
wherein said first NTP ADD/DROP element (216a) encapsulates incoming NTP messaging time-stamps within IEEE-1588 messages entering said IEEE-1588 protocol region (217), and updates said messaging time-stamp with timing information according to IEEE-1588 delay correction, and
wherein said second NTP ADD/DROP element (216b) de-encapsulates said NTP messaging time-stamps for forwarding to an NTP Client (229) and updates said messaging time-stamp with timing information according to IEEE-1588 delay correction.

2. A system as claimed in claim 1 wherein
said first NTP ADD/DROP element (216a) further comprises a local clock which times a buffering delay incurred by said NTP messaging time-stamp while awaiting an IEEE-1588 message.

3. A system as claimed in claim 2 wherein
said buffering delay is used by said first NTP ADD/DROP element (216a) to adjust the NTP messaging time-stamp.

4. A system as claimed in claim 2 wherein
said local clock has an inherent accuracy on the order of one microsecond and a precision on the order of 100 ppm.

5. A system as claimed in claim 1 wherein
said encapsulation uses the Type_Length_Value field of said IEEE-1588 messages.

6. A method for providing protocol inter-operation between an IEEE-1588 protocol region (217) having on-path-support for messaging and an NTP protocol region wherein NTP messages traverse the IEEE-1588 protocol region (217), said method comprising the steps of:
encapsulating an NTP timing message within an IEEE-1588 timing message upon entry of said NTP timing message into said IEEE-1588 protocol region (217);
de-encapsulating said NTP timing message from said IEEE-1588 timing message upon exit from said IEEE-1588 protocol region (217); and
adjusting a time-stamp of said NTP timing message with timing information according to IEEE-1588 delay correction.

7. A method as claimed in claim 6 comprising the further step of incrementing said time-stamp of said NTP timing message by an amount representative of a buffering delay incurred before said NTP timing message could be encapsulated within said IEEE-1588 timing message.

8. A method as claimed in claim 7 wherein said incrementing step is performed prior to encapsulation.

9. A method as claimed in claim 7 wherein
said buffering delay is measured by a clock located at the network element which performs the encapsulating step.

10. A method as claimed in claim 6 wherein
said encapsulating step uses the Type_Length_Value field of said IEEE-1588 messages.

## Patentansprüche

1. System zur Zusammenwirkung von Protokollen zwischen einem IEEE-1588-Protokollbereich (217) mit On-Path-Unterstützung für die Nachrichtenübermittlung und einem NTP-Protokollbereich, wobei NTP-Nachrichten den IEEE-1588-Protokollbereich (217) durchlaufen, wobei das besagte System umfasst:
ein erstes NTP-ADD/DROP-Element (216a) an einer Protokollgrenze zwischen dem besagten NTP-Protokollbereich und dem besagten IEEE-1588-Protokollbereich (217), an welcher die NTP-Nachrichten in dem IEEE-1588-Bereich eintreffen;
ein zweites NTP-ADD/DROP-Element (216b) an einer Protokollgrenze zwischen dem besagten IEEE-1588-Protokollbereich (217) und dem NTP-Protokollbereich, an welcher die NTP-Nachrichten den besagten IEEE-1588-Bereich verlassen;
wobei das besagte erste NTP-ADD/DROP-Element (216a) eingehende NTP-Nachrichtenübermittlungszeitstempel in den in dem besagten IEEE-1588-Protokollbereich (217) eingehenden IEEE-1588-Nachrichten einkapselt und den besagten Nachrichtenübermittlungszeitstempel mit Zeitinformationen gemäß einer IEEE-1588-Verzögerungskorrektur aktualisiert, und
wobei das besagte zweite NTP-ADD/DROP-Element (216b) die besagten NTP-Nachrichtenübermittlungszeitstempel für die Weiterleitung an einen NTP-Client (229) entkapselt und den besagten Nachrichtenübermittlungszeitstempel mit Zeitinformationen gemäß einer IEEE-1588-Verzögerungskorrektur aktualisiert.

2. System nach Anspruch 1, wobei
das besagte erste NTP-ADD/DROP-Element (216a) weiterhin einen lokalen Taktgeber umfasst, welcher eine von dem besagten NTP-Nachrichtenübermittlungszeitstempel während des Erwartens einer IEEE-1588-nachricht erlittenen Pufferverzögerung festlegt.

3. System nach Anspruch 2, wobei
die besagte Pufferverzögerung von dem besagten ersten NTP-ADD/DROP-Element (216a) verwendet wird, um den NTP-Nachrichtenübermittlungszeitstempel anzupassen.

4. System nach Anspruch 2, wobei
der besagte Taktgeber eine inhärente Genauigkeit in der Größenordnung von einer Mikrosekunde und eine Präzision in der Größenordnung von 100 ppm aufweiset.

5. System nach Anspruch 1, wobei
die besagte Einkapselung das Type-Length-Value-Feld der besagten IEEE-1588-Nachrichten verwendet.

6. Verfahren zur Zusammenwirkung von Protokollen zwischen einem IEEE-1588-Protokollbereich (217) mit On-Path-Unterstützung für die Nachrichtenübermittlung und einem NTP-Protokollbereich, wobei NTP-Nachrichten den IEEE-1588-Protokollbereich (217) durchlaufen, wobei das besagte Verfahren die folgenden Schritte umfasst:
Einkapsein einer NTP-Zeitnachricht innerhalb einer IEEE-1588-Zeitnachricht nach Eintreffen der besagten NTP-Zeitnachricht in dem besagten IEEE-1588- Protokollbereich (217);
Entkapseln der besagten NTP-Zeitnachricht aus der besagten IEEE-1588-Zeitnachricht nach Verlassen des besagten IEEE-1588- Protokollbereichs (217);
Anpassen eines Zeitstempels der besagten NTP-Zeitnachricht mit Zeitinformationen gemäß der IEEE-15888-Verzögerungskorrektur.

7. Verfahren nach Anspruch 6, weiterhin den folgenden Schritt umfassend:
Inkrementieren des besagten Zeitstempels der besagten NTP-Zeitnachricht um einen Wert, welcher für eine Pufferverzögerung, die aufgetreten ist, bevor die besagte NTP-Zeitnachricht innerhalb der besagten IEEE-1588-Zeitnachricht eingekapselt werden konnte, repräsentativ ist.

8. Verfahren nach Anspruch 7, wobei
der besagte Schritt des Inkrementierens vor der Einkapselung durchgeführt wird.

9. Verfahren nach Anspruch 7, wobei
die besagte Pufferverzögerung mittels eines an dem Netzwerkelement, weiches den Schritt des Einkapselns durchführt, angeordneten Taktgebers gemessen wird.

10. Verfahren nach Anspruch 6, wobei
der besagte Schritt des Einkapselns das Type-Length-Value-Feld der besagten IEEE-1588-Nachrichten verwendet.

## Revendications

1. Système pour fournir un interfonctionnement de protocoles entre une région de protocole IEEE-1588 (217) présentant un support sur trajet pour la messagerie et une région de protocole NTP dans lequel des messages NTP traversent la région de protocole IEEE-1588 (217), ledit système comprenant :
un premier élément d'insertion/extraction NTP (216a) au niveau d'une limite de protocole entre ladite région de protocole NTP et ladite région de protocole IEEE-1588 (217) où les messages NTP entrent dans la région IEEE-1588 ;
un deuxième élément d'insertion/extraction NTP (216b) au niveau d'une limite de protocole entre ladite région de protocole IEEE-1588 (217) et la région de protocole NTP où les messages NTP sortent de ladite région IEEE-1588 ;
dans lequel ledit premier élément d'insertion/extraction NTP (216a) encapsule des estampilles temporelles de messagerie NTP entrantes dans des messages IEEE-1588 entrant dans ladite région de protocole IEEE-1588 (217), et met à jour ladite estampille temporelle de messagerie avec des informations de synchronisation conformément à la correction de retard IEEE-1588, et
dans lequel ledit deuxième élément d'insertion/extraction NTP (216b) désencapsule lesdites estampilles temporelles de messagerie NTP à acheminer vers un client NTP (229) et met à jour ladite estampille temporelle de messagerie avec des informations de synchronisation conformément à la correction de retard IEEE-1588.

2. Système selon la revendication 1 dans lequel
ledit premier élément d'insertion/extraction NTP (216a) comprend en outre une horloge locale qui synchronise un retard de mise en tampon subi par ladite estampille temporelle de messagerie NTP en attendant un message IEEE-1588.

3. Système selon la revendication 2 dans lequel
ledit retard de mise en tampon est utilisé par ledit premier élément d'insertion/extraction NTP (216a) pour régler l'estampille temporelle de messagerie NTP.

4. Système selon la revendication 2 dans lequel
ladite horloge locale a une précision inhérente de l'ordre d'une microseconde et une précision de l'ordre de 100 ppm.

5. Système selon la revendication 1 dans lequel
ladite encapsulation utilise le champ Type_Longueur_Valeur desdits messages IEEE-1588.

6. Procédé pour fournir un interfonctionnement de protocoles entre une région de protocole IEEE-1588 (217) présentant un support sur trajet pour la messagerie et une région de protocole NTP dans lequel des messages NTP traversent la région de protocole IEEE-1588 (217), ledit procédé comprenant les étapes suivante :
encapsuler un message de synchronisation NTP dans un message de synchronisation IEEE-1588 lors de l'entrée dudit message de synchronisation NTP dans ladite région de protocole IEEE-1588 (217) ;
désencapsuler ledit message de synchronisation NTP à partir dudit message de synchronisation IEEE-1588 lors de la sortie de ladite région de protocole IEEE-1588 (217) ; et
régler une estampille temporelle dudit message de synchronisation NTP avec des informations de synchronisation conformément à la correction de retard IEEE-1588.

7. Procédé selon la revendication 6 comprenant l'étape supplémentaire suivante :
incrémenter ladite estampille temporelle dudit message de synchronisation NTP par une quantité représentative d'un retard de mise en tampon subi avant que ledit message de synchronisation NTP ne puisse être encapsulé dans ledit message de synchronisation IEEE-1588.

8. Procédé selon la revendication 7 dans lequel
ladite étape d'incrémentation est exécutée avant l'encapsulation.

9. Procédé selon la revendication 7 dans lequel
ledit retard de mise en tampon est mesuré par une horloge située au niveau de l'élément de réseau qui exécute l'étape d'encapsulation.

10. Procédé selon la revendication 6 dans lequel
ladite étape d'encapsulation utilise le champ Type_Longueur_Valeur desdits messages IEEE-1588.
